# EUROPEAN PATENT APPLICATION

(11) **EP 3 121 105 A1**
(43) Date of publication of application: **25.01.2017**
(21) Application number: 16177796.6
(22) Date of filing: 04.07.2016
(51) Int. Cl.: B62M 6/65, B62K 25/02

(54) **DEVICE FOR A PEDAL ASSISTED BICYCLE**

(30) Priority: 23.07.2015 IT UB20152421
(71) Applicant: Zehus S.r.l., 20122 Milan (IT)
(72) Inventor: LISANTI, Paolo, 24040 Lallio (BG) (IT); GIUDICI, Paolo, 20020 Arese (MI) (IT)
(74) Representative: Fiorentino, Luca

(57) **Abstract**

A device (1) for the assisted movement of a pedal assisted bicycle, comprising:
- an electric motor (2);
- a first (5') and second shafts (5") laterally projecting on two opposite sides of the device (1) for fixing the device (1) to portions (6', 6") of the bicycle frame at a first (14') and second fixing seats (14"), respectively;
- means for coupling the device (1) to a bicycle wheel in order to convert the motor movement (2) in a rotation of said wheel around said first (5') and second shafts (5");
- first and second means for connecting the first (5') and second shafts (5") to said frame portions (6', 6").

Said first (5') and second shafts (5") comprise a first (10') and second connecting seats (10") at their ends, and said first and second connecting means comprise a first (11') and second connecting pins (11") fixedly and removably coupable to said first (10') and second connecting seats (10"), and connectable to said first (14') and second fixing seats (14") of the frame. Said first (11') and second connecting pins (11 ") are shaped so that their lateral portions laterally project from said first (10') and second connecting seats (10") of the first (5') and second shafts (5") so that said their projecting lateral portions engage said first (14') and second fixing seats (14").

## Description

### Technical field of the invention

The present invention refers to a device for the assisted movement of a pedal assisted bicycle. Particularly, the present invention refers to a device for the assisted movement of a pedal assisted bicycle provided with suitable means for the coupling to the frame of this latter. Preferably but not exclusively, the present invention refers to a device for the assisted movement of a type known as "geared", in other words a device provided with an electric motor transmitting the motion to a closure body, in turn connected to the wheel, by a gear.

### Prior art

The pedal assisted bicycles are peculiar bicycles wherein the cyclist is partially pedal-aided by an electric motor. They normally comprise the electric motor itself, a battery or a battery pack, a module for controlling the electric motor and the power flows, and several sensors, such as for example sensors for measuring the angular speed of the motor or the torque of the cyclist.

Such assisted movement devices are coupled to the wheels of the bicycle or to the pedals thereof.

In case the pedal assisted device associated to the wheel is coupled to the wheels, particularly when it is coupled to the rear wheel, the device is coupled to the bicycle by means of the frame thereof, at points wherein normally the wheel hub is coupled.

Coupling the wheel hub to the frame is typically implemented by a through pin, to which the hub is rotatively coupled, generally by bearings, which in turn is fixed to the frame by coupling means which are generally of a standard type. Specifically, the frame portions destined to be coupled to the through pin, are divided in two categories: the open fork portion and the closed fork portion. The way the pin is fixed depends on the type of fork used. Nowadays there are many systems for implementing such types of coupling.

However, the known assisted movement devices, particularly the "geared" type, generally show a configuration which is compatible only with some of the known coupling means.

### Summary of the invention

Therefore, it is an object of the present invention to make available a device for the assisted movement of a pedal assisted bicycle which is coupable to the frame of the bicycle, of a closed-fork or open-fork type, without requiring any modification of this latter.

This and other objects are met by a device for the assisted movement of a pedal assisted bicycle according to claim 1.

### Brief description of the figures

For better comprehending the invention and appreciating the advantages, some exemplifying and non limiting embodiments thereof will be described in the following, with reference to the accompanying figures, wherein:

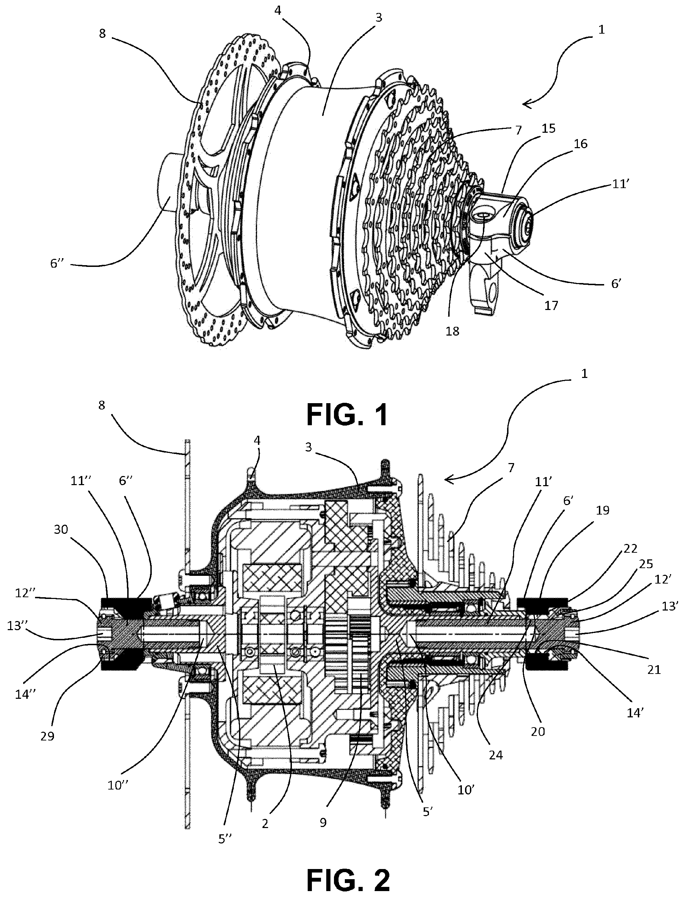

Figure 1 is a perspective view of a device for the assisted movement of a pedal assisted bicycle according to a possible embodiment of the invention, coupled to a frame of the closed-fork type;
Figure 2 is a cross-section view of the device of Figure 1;

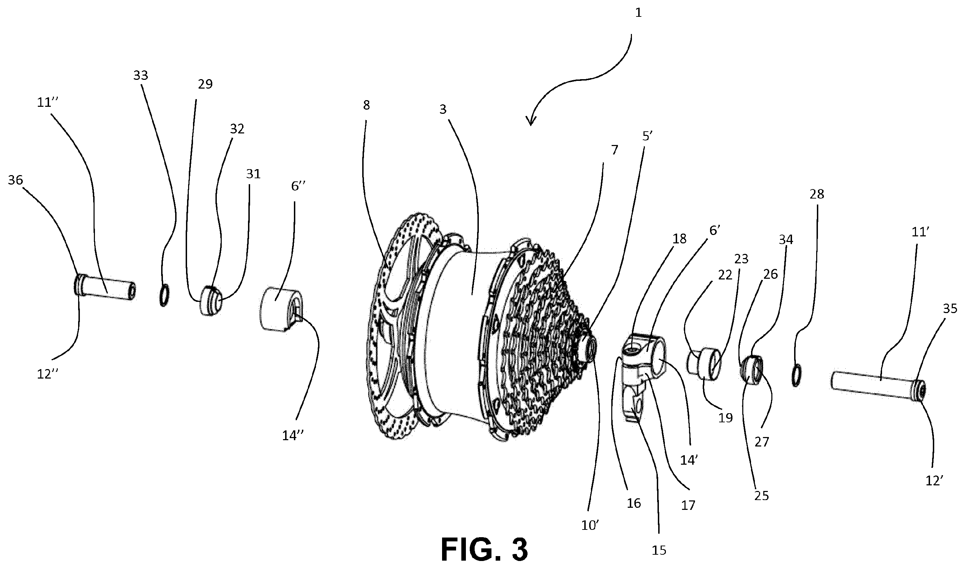

Figure 3 is an exploded perspective view of the device of Figure 1;
Figure 4 is a perspective view of a device for the assisted movement of a pedal assisted bicycle according to a further embodiment of the invention, coupled to a frame of the open-fork type;
Figure 5 is an exploded perspective view of the device of Figure 4.

### Detailed description of the invention

With reference to the figures, a device for the assisted movement of a pedal assisted bicycle is generally indicated by reference 1. The device 1 comprises an electric motor 2, for example a brushless motor, suitable for generating, under determined conditions, an additional power which is algebraically added to or is a substitution of the power introduced by a cyclist by his/her action on the bicycle pedals, in order to reduce the effort. The electric motor 2 is also suitable for acting as a generator for charging the batteries.

The device 1 is destined to be associated to one or more bicycle wheels, preferably to a rear wheel, so that the power generated by the electric motor 2 can be transmitted to this latter.

According to the embodiments illustrated in the figures, the device 1 comprises a closure body 3 receiving inside the electric motor 2 and other components of the device 1 itself. The closure body 3 is destined to be integrally rotatively connected to the bicycle wheel to which the device 1 is associated, and for this matter, comprises means for coupling the device to such wheel. For example, the closure body 3 can comprise suitable holes 4 for coupling it to the spokes of the bicycle wheel.

A first shaft 5' and a second shaft 5" laterally project from the closure body 3, and respectively laterally project on the two opposite sides of the device 1. A first and second frame portions are indicated with references 6' and 6" in the figures, respectively. The device 1 can be connected to the first frame portion 6' by the first shaft 5', and to the second frame portion 6" by the second shaft 5", according to modes which will be described in the following. The frame portions 6' and 6" can be alternatively of a closed-fork type (the embodiments illustrated in Figures from 1 to 3) or of the open-fork type (the embodiments being illustrated in Figures from 4 to 5).

Preferably, the closure body 3 is connected to the shafts 5' and 5" so that, when the motor 2 is energized, in other words when the rotor thereof performs rotations with respect to its stator, the closure body 3 rotates with respect to them. This causes a rotation of the bicycle wheel to which the device 1 is associated. For transmitting the motor 2 motion to the closure body, preferably the device 1 comprises a reduction gear 9 (a device known as "geared").

A transmission group such to mechanically connect the closure body 3 itself and therefore the motor 2 rotor, to the bicycle pedals, is associated to the closure body 3. For example, a pinion (in this case having a constant transmission ratio) or a group of pinions 7 (in case of a variable transmission ratio, according to the embodiment illustrated in the figure) engageable for example by a chain driven by the bicycle pedals, can be connected for example to the closure body 5 by a free wheel mechanism. In this way, also the cyclist pedal-thrust is converted in a rotation of the closure body 3 with respect to the shafts 5' and 5". Moreover, a disc 8 of a disc brake, if provided, can be associated to the closure body 3.

The device 1 can comprise one or more batteries connected to the electric motor 2 or can be associated or is associatable to batteries external to the device 1 itself. The batteries have the function of supplying energy to the electric motor 2. For managing the power flows between the motor and the battery, the device 1 can be equipped with or connected to a suitable control electronics.

Further, the device 1 can comprise one or more sensors for detecting parameters about the operation thereof, such as for example a sensor for detecting the speed and/or the angular position of the pinions 7 with respect to the shaft, or the angular speed and/or position of the rotor.

With reference to the figures, means which the device 1 is provided for connecting it to the bicycle frame will be described, particularly for connecting the first 5' and second shafts 5" to the frame. The connecting means, as they will be explained, are such to enable to connect the device 1 to bicycles frames having closed-fork fixing seats (Figures from 1 to 3) or to open-fork fixing seats (Figures from 4 to 5).

The first 5' and second shafts 5" comprise, at their respective external ends, a first 10' and second threaded seats 10", respectively. For fixing the device to the frame, the connecting means comprise a first 11' and second threaded pins 11" suitable for being coupled, particularly by screwing, to the first 10' and second threaded seats 10" of the first 5' and second shafts 5", respectively. The connecting means exhibit an alternative arrangement depending on whether the device 1 is coupled to closed-fork or open-fork frames.

Alternatively, it is observed that the seats 10' and 10" and pins 11' and 11" can be unthreaded and can be fixedly and removably coupable to each other according to different modes (for example by a snap-fit, a bayonet fit, etcetera). However in the following, the description will illustratively made reference to the particular embodiment wherein the connecting seats 10' and 10" and connecting pins 11' and 11" are threaded as hereinbefore described.

Generally, the first 11' and second connecting pins 11" are shaped so that their lateral portions laterally project respectively from the first 10' and second connecting seats 10" of the first 5' and second shafts 5", so that their projecting lateral portions engage a first 14' and second fixing seats 14" respectively of the first 6' and second frame portions 6". As it will be described in the following, the projecting lateral portions of the first 11' and second connecting pins 11" engage the first 14' and second fixing seats 14" preferably in a fixed and removable way.

Referring to Figures from 1 to 3, a device 1 according to an embodiment suitable for being coupled to a frame provided with a closed fork, will be described.

According to this embodiment the first 11' and second threaded pins 11" preferably comprise respective heads 12' and 12" desirably in turn provided with suitable shaped holes 13' and 13" adapted to enable to be screwed by suitable tools.

Advantageously, the device 1 further comprises first and second adapting means suitable for fixingly coupling the first 5' and second pins 5" to respective first 14' and second fixing seats 14" of the first 6' and second frame portions 6". In this way, it is not necessary to modify the fixing seats 14' and 14" for connecting the device 1 to the frame. The first 14' and second fixing seats 14" of the first 6' and second frame portions 6" are in this case closed.

Preferably, the first and second adapting means have shapes different from each other, since usually they have different shapes of the fixing seats 14' and 14" of the closed-fork frame on both sides of the bicycle wheel.

With reference to the first adapting means, they are preferably configured for being disposed at the fixing seat in which a pin-blocking device is provided. A known type blocking device is indicated by reference 15. The blocking device 15 according to the illustrated embodiment, provides to axially and radially block the first adapting means and consequently the first threaded pin 11' by approaching two distinct flanges 16 and 17 of the first frame portion 6' by a suitable screw 18. Obviously, as it will be evident to a skilled person, the blocking device 15 can be shaped according to different arrangements in order to implement a fixed and removable coupling.

Advantageously, the first adapting means comprise an adapting body 19 suitable for being inserted in the first frame fixing seat 14'. According to a possible embodiment, the adapting body 19 comprises a cylindrical body having an external cylindrical surface 20 adapted to enter the fixing seat 14', which in turn has an inner surface 21 which is also cylindrical. Preferably, the adapting body 19, as the first fixing seat 14', comprises a first and second portions having radial sizes greater than the first portion. In this way, the adapting body 19 provides a stop surface 22 for axially blocking the adapting body 19 itself inside the first frame fixing seat 14'. It is observed that the adapting body 19 is preferably inserted in the first fixing seat 14' from the outside towards the inside and is axially blocked by the stop surface 22 according to the same direction.

The adapting body 19 comprises an inner through opening 23 delimited by an inner surface 24 comprising a cylindrical portion suitable for enabling a first threaded pin 11' to pass inside it.

Advantageously, the first adapting means comprise an anti-screwing body 25 adapted to prevent the first threaded pin 11' from being unscrewed inside the fixing seat 14'. The anti-screwing body 25 comprises an external surface 26 at least partially frusto-conical which is adapted to be coupled at a respective frusto-conical portion of the inner surface 24 of the adapting body 19. The anti-screwing body 25 further comprises an inner through opening 27 for the passage of the first pin 11'.

Further advantageously, the first adapting means further comprise a first seal 28 suitable for being inserted in the previously cited inner through opening 27 of the anti-screwing body 25. The seal 28 can be disposed at a peripheral groove 35 made in the first threaded pin 11', preferably at its head 12'.

Advantageously, the anti-screwing body 25 comprises a notch 34, preferably placed along the axial periphery, which forms a weakening area particularly a radial one of the anti-screwing body itself. In this way, following the insertion of the first pin 14' in the inner through opening 27 of the anti-screwing body 25, the anti-screwing body 25 expands inside the inner through opening 23 of the adapting body 19 due to the pressure exerted by the first seal 28. This latter indeed, also disposed inside the inner through opening 27 of the anti-screwing body 25, is pressed by the first threaded pin 11'. In this way, it is ensured the pin 11' will not be unscrewed and therefore will not accidentally slip out of the first threaded seat 10'.

According to the illustrated embodiment, at the second fixing seat 14", it is not provided a blocking device analogous to the blocking device 15 described with reference to the first fixing seat 14'.

Advantageously, the second adapting means comprise an anti-screwing adapting body 29. It both acts as an adaptor of the second threaded pin 11" for the second fixing seat 14", and as an anti-screwing device adapted to prevent the second threaded pin 11" from unscrewing and slipping out of the second threaded seat 10".

The anti-screwing adapting body 29 comprises an external surface 30 at least partially frusto-conical, suitable for being coupled to a respective frusto-conical portion of the second fixing seat 14". The anti-screwing adapting body 29 further comprises an inner through opening 31 in turn comprising a frusto-conical portion. The anti-screwing adapting body 29 further comprises a notch 32, preferably placed on the periphery and axially extending, in order to form a weakening radial area of the anti-screwing adapting body 29 itself.

The second adapting means further comprising a second seal 33 suitable for being inserted inside the inner through opening 31 of the anti-screwing adapting body 29, particularly at the frusto-conical portion thereof. In this way, following the insertion of the second threaded pin 11" into the inner through opening 31 of the anti-screwing adapting body 29, the anti-screwing adapting body 29 expands inside the second fixing seat 14" due to the pressure exerted by the second seal 33. The second seal 33 can be disposed at a peripheral groove 36 made in the second threaded pin 11 ", preferably at the head 12" thereof.

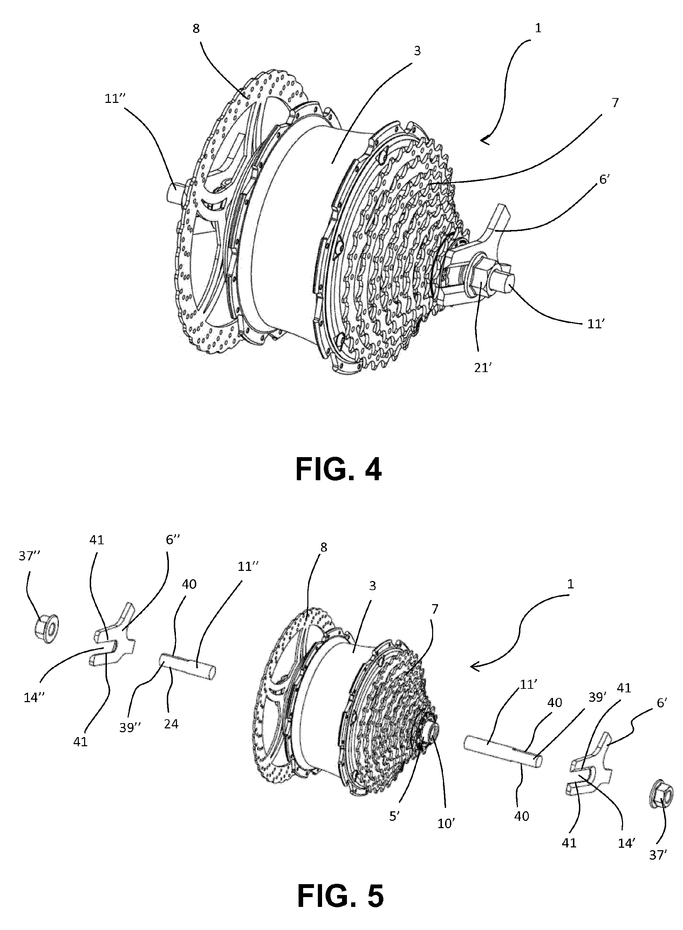

With reference to Figures 4-5, a device 1 according to an embodiment suitable for being coupled to a frame provided with an open fork will be now described. According to this variant, the fixing seats 14' and 14" of the frame are open, and preferably identical to each other.

According to this embodiment, the first 11' and second threaded pins 11", besides the threads necessary for being screwed respectively into the first 10' and second threaded seats 10" of the first 5' and second shafts 5", have threads also at the opposite ends 39' and 39", in order to enable to screw respective nuts 37' and 37". Advantageously, the threaded pins 11' and 11" have lengths such to laterally project outside the fixing seats 14' and 14", in order to enable to screw the nuts 37' and 37" at the ends 39' and 39". The nuts 37' and 37", after being screwed, abut against a respective first 38' and second external surfaces 38" of the first 6' and second frame portions 6". In this case, the pins 11' and 11" are definitely blocked in the fixing seats 14' and 14". Particularly, they are prevented from axially slipping out, and also from slipping out of the open portions of the fixing seats 14' and 14".

Advantageously, the ends 39' and 39" are shaped in order to make a shape-coupling with the fixing seats 14' and 14" for avoiding rotations of the threaded pins 11' and 11" in the fixing seats 14' and 14" themselves. For example, the pins 11' and 11" can comprise smooth flat portions 40, for example two of such portions, opposite and parallel to each other, which will be positioned between respective rectilinear walls 41 of the fixing seats 14' and 14". At these flat portions 40, the pins 11' and 11" are devoid of threads which are anyway present in the remaining peripheral portions, so that the nuts 37' and 37" can be still screwed.

From the above given description, a person skilled in the art could appreciate as the device for the assisted movement of a pedal assisted bicycle enables to couple the device itself to standard frames, having a closed fork or an open fork, without requiring to particularly modify the same. Installing the movement assisted device is therefore simple and economical.

A skilled person, in order to meet contingent specific needs, could add numerous additions, modifications, or substitutions of elements with other operatively equivalent, to the described embodiments of the device for the assisted movement of a pedal assisted bicycle, without falling out of the scope of the attached claims.

## Claims

1. Device (1) for the assisted movement of a pedal assisted bicycle, comprising:
- an electric motor (2);
- a first (5') and second shafts (5") laterally projecting on two opposite sides of the device (1) for fixing the device (1) to portions (6', 6") of the bicycle frame at a first (14') and second fixing seats (14"), respectively;
- means for coupling the device (1) to a bicycle wheel in order to convert the motor movement (2) in a rotation of said wheel around said first (5') and second shafts (5");
- first and second means for connecting the first (5') and second shafts (5") to said frame portions (6', 6");
wherein said first (5') and second shafts (5") comprise a first (10') and second connecting seats (10") at their ends, and said first and second connecting means comprise a first (11') and second connecting pins (11 ") fixedly and removably coupable to said first (10') and second connecting seats (10") and connectable to said first (14') and second frame fixing seats (14"), said first (11') and second connecting pins (11") being shaped so that their lateral portions laterally project from said first (10') and second connecting seats (10") of the first (5') and second shafts (5") such that said projecting lateral portions thereof engage said first (14') and second fixing seats (14").

2. Device (1) according to claim 1, wherein said first and second connecting means are configured for connecting to a first (14') and second fixing seats (14"), part of a closed fork system, and comprise first and second adapting means suitable for fixedly and removably coupling said first (11') and second connecting pins (11") to said first (14') and second fixing seats (14") of the frame.

3. Device (1) according to claim 2, wherein said first adapting means comprise an adapting body (19) suitable for being inserted inside the first fixing seat (14'), comprising an inner through opening (23) suitable for enabling the passage of said first connecting pin (11').

4. Device (1) according to claim 3, wherein said adapting body (19) comprises a first and second portions having a radial size greater than the first portion, in order to form a stop surface (22) for axially blocking the adapting body (19) in the first frame fixing seat (14').

5. Device (1) according to claim 3 or 4, wherein said first adapting means comprise an anti-screwing body (25) comprising an outer frusto-conical portion suitable for being coupled to a frusto-conical portion of said inner through opening (23) of the adapting body (19), and an inner through opening (27) at least partially frusto-conical, said first adapting means further comprise a first seal (28) suitable for being inserted in said inner through opening (27) of the anti-screwing body (25), said anti-screwing body (25) comprising a notch (34) such that, following the insertion of the first connecting pin (11') in the inner through opening (27) of the anti-screwing body (25), the anti-screwing body (25) expands in the inner through opening (23) of the adapting body (19) due to the pressure exerted by the first seal (28).

6. Device (1) according to any of claims from 2 to 5, wherein said second adapting means comprise an anti-screwing adapting body (29) comprising a frusto-conical portion adapted to be coupled to a frusto-conical portion of said second fixing seat (14") of the frame, and an inner through opening (31) comprising a frusto-conical portion, said second adapting means further comprising a second seal (33) suitable for being inserted in said inner through opening (31) of the anti-screwing adapting body (29), said anti-screwing adapting body (29) comprising a notch (32) so that, following the insertion of the second connection pin (11 ") in the inner through opening (31) of the anti-screwing adapting body (29), the anti-screwing adapting body (29) expands in the second fixing seat (14") of the frame due to the pressure exerted by the second seal (33).

7. Device (1) according to claim 1, wherein said first (11') and second connecting pins (11") are configured for connecting to a first (14') and second fixing seats (14"), part of an open fork system, and comprise respective threaded ends (39', 39") and said first and second connecting means comprise a first (37') and second nuts (37") screwable to said threaded ends (39', 39") of the first (11') and second connecting pins (11") for blocking said first (11') and second connecting pins (11 ") to said first (14') and second fixing seats (14") of the frame.

8. Device (1) according to claim 7, wherein the ends (39', 39") of said first (11') and second connecting pins (11 ") are configured for forming a shape-coupling with said first (14') and second fixing seats (14") of the frame, in order to avoid rotations of the first (11') and second connecting pins (11 ") with respect to the first (14') and second fixing seats (14") of the frame.

9. Device (1) according to any of the preceding claims, wherein said first (11') and second connecting pins (11") are threaded pins, and said first (10') and second connecting seats (10") are threaded seats, so that the first (11') and second connecting pins (11 ") are screwable in said first (10') and second connecting seats (10"), respectively.

10. Pedal assisted bicycle comprising a device (1) for the assisted movement according to any of the preceding claims.
